# NEUE EUROPÄISCHE PATENTSCHRIFT

(11) **EP 2 571 792 B2**
(45) Veröffentlichungstag und Bekanntmachung des Hinweises auf die Entscheidung über den Einspruch: **05.04.2017**
(45) Hinweis auf die Patenterteilung: 02.04.2014
(21) Anmeldenummer: 11723900.4
(22) Anmeldetag: 19.05.2011
(51) Int. Cl.: B65G 43/08, B65G 47/52, B65G 47/96

(54) **FÖRDERANLAGENEINHEIT**
CONVEYING INSTALLATION UNIT
UNITÉ D'INSTALLATION DE TRANSPORT

(30) Priorität: 20.05.2010 DE 102010022156
(43) Veröffentlichungstag der Anmeldung: 27.03.2013
(73) Patentinhaber: Siemens Aktiengesellschaft, 80333 München (DE)
(72) Erfinder: LINKE, Martin, 81371 München (DE)
(86) Internationale Anmeldenummer: PCT/EP2011/058187
(87) Internationale Veröffentlichungsnummer: WO 2011/144707

(56) Entgegenhaltungen:
- WO-A2-2004/035365
- DE-A1-102008 037 261
- US-B2- 7 212 884

## Beschreibung

Die Erfindung betrifft eine Förderanlageneinheit nach dem Oberbegriff des Patentanspruchs 1.

Aus der DE 10 2008 037 261 A1 ist eine Förderanlageneinheit bekannt, die eine Aneinanderreihung von Förderelementen zur Förderung von Stückgütern aufweist. Die Förderelemente sind jeweils als Quergurtförderer zum Ein- bzw. Ausschleusen von Stückgütern ausgebildet und verfügen jeweils über eine eigene Funktionseinheit in der Form eines lokalen Antriebs für den jeweiligen Quergurt. Ein Start-Stopp-Befehl zur Aktivierung bzw. Deaktivierung eines lokalen Antriebs wird einer lokalen Steuereinheit des entsprechenden Förderelements mittels eines Funksignals übertragen. Kurze Unterbrechungen des Datenverkehrs bei einem Übergang von einer ersten Funkzelle in eine weitere Funkzelle (auch "Roaming" genannt) können jedoch eine Beeinträchtigung der Genauigkeit in der Aktivierung bzw. Deaktivierung eines Förderelements herbeiführen. Bei einer typischen Fördergeschwindigkeit der Förderelemente von 2,5 m/s kann aufgrund dieser Unterbrechung ein Fehler von ca. 15 cm in der Positionierung eines von einem Förderelement transportierten Stückguts bei einem Ein- bzw. Ausschleusen entstehen, da ein Start-Stopp-Befehl verspätet vom lokalen Antrieb des Förderelements empfangen wird. Um diese Ungenauigkeit zu reduzieren wird in der oben genannten Druckschrift vorgeschlagen, zusätzlich zur Nutzung von Funksignalen, die zur Übertragung einer Vorgabe einer auszuführenden Aktion an die lokale Steuereinheit eines Förderelements dienen, speziell für die Aktivierung bzw. Deaktivierung der lokalen Antriebe ein System mit einer Sender-Empfänger-Lichtschranke vorzusehen, das den Start-Stopp-Befehl in der Form eines binären optischen Signals auf das entsprechende Förderelement überträgt. Diese optische Aktivierung wird zusätzlich zur Übertragung mittels Funksignalen eingesetzt, wodurch einen zusätzlichen Aufwand und zusätzliche Kosten entstehen.

Die Schrift US 7,212,884 B2 offenbart eine gattungsgemässe Fördereinheit, bei der in Hauptförderrichtung eine drahtlose Übermittlung von Steuersignalen erfolgt.

Der Erfindung liegt die Aufgabe zugrunde, eine gattungsgemäße Förderanlageneinheit bereitzustellen, bei welcher eine hohe Genauigkeit in der Steuerung der Funktionseinheiten der Förderelemente mittels einer konstruktiv einfachen und kostengünstigen Übertragung des Steuersignals erreicht werden kann.

Ausgehend von einer Förderanlageneinheit mit mobilen Förderelementen, die zum Fördern von Stückgütern vorgesehen sind und jeweils eine Funktionseinheit aufweisen, und einer mobilen Signaleinheit, die zum Herstellen einer drahtlosen Verbindung mit einer stationären Kommunikationseinheit vorgesehen ist, wobei die Funktionseinheiten jeweils mittels eines von der Signaleinheit empfangenen Steuersignals steuerbar sind, wird vorgeschlagen, dass die Signaleinheit zumindest zwei mobile, voneinander beabstandete Empfangseinheiten und eine mobile Steuereinheit aufweist, welche für eine Zuordnung des Steuersignals in Wirkverbindung mit den Empfangseinheiten und mit den Funktionseinheiten steht. In Bezug auf einen durch den Empfang des Steuersignals ausgelösten Steuervorgang einer Funktionseinheit kann durch eine räumliche Verteilung von Empfangseinheiten zum Empfangen des Steuersignals und deren Koordinierung mittels einer Steuereinheit der Einfluss von geometrischen Gegebenheiten einer Übertragungstechnik auf den Steuervorgang vermindert, insbesondere vermieden werden. Hierdurch kann eine hohe Genauigkeit in der Abwicklung des Steuervorgangs ohne Einsatz einer zusätzlichen Übertragungstechnik erzielt werden.

Unter einer "mobilen" Einheit soll insbesondere eine Einheit verstanden werden, die relativ zu einem Boden, auf welchem die Förderanlageneinheit aufgestellt ist, beweglich ist. Die mobilen Förderelemente werden zum Zweck der Förderung von Stückgütern zur Bewegung in einer Hauptförderrichtung angetrieben. Die mobile Signaleinheit begleitet zweckmäßigerweise eine Bewegung der Förderelemente und kann hierbei vorteilhaft an den Förderelementen befestigt sein. Vorzugsweise sind die Empfangseinheiten der Signaleinheit jeweils an einem unterschiedlichen Förderelement befestigt. Eine "stationäre" Einheit entspricht insbesondere einer Einheit, die relativ zum Boden fest angeordnet ist. Die "Hauptförderrichtung" der Förderanlageneinheit bezieht sich insbesondere auf die Bewegungsrichtung eines Grundkörpers der Förderelemente, wobei die Funktion der ihnen zugeordneten Funktionseinheit darin bestehen kann, ein Stückgut in einer von der Hauptförderrichtung abweichenden Richtung relativ zum Grundkörper zu bewegen. Unter "vorgesehen" soll insbesondere speziell ausgeführt, ausgestattet, ausgelegt und/oder programmiert verstanden werden.

Das Steuersignal zum Steuern der Funktionseinheit eines Förderelements trägt vorteilhafterweise eine Information, die sich auf ein vom Förderelement transportiertes Stückgut bezieht. Diese Information kann Eigenschaften des Stückguts, wie z.B. geometrischen Daten, einer Ausrichtung oder einer Position des Stückguts, und/oder Parametern der von der Funktionseinheit auszuführenden Aktion, wie z.B. einer Bewegungsrichtung, einem Beschleunigungswert usw. entsprechen. Alternativ oder zusätzlich kann das Steuersignal einem Aktivierungssignal zum Aktivieren bzw. Deaktivieren der Funktionseinheit entsprechen. Unter einem "Aktivierungssignal" soll insbesondere ein Auslöse- und/oder Start-Stopp-Signal zum Starten bzw. Stoppen eines Steuervorgangs der Funktionseinheit verstanden werden. Ist das Steuersignal ein Aktivierungssignal für eine Funktionseinheit, kann durch die erfindungsgemäße Ausführung der Signaleinheit eine Verzögerung in der Aktivierung bwz. Deaktivierung der Funktionseinheit vorteilhaft reduziert werden.

Die Funktionseinheit ist zur Durchführung eines Vorgangs in Verbindung mit einem vom entsprechenden Förderelement transportierten Stückgut vorgesehen. Beispielweise kann die Funktionseinheit zur Ermittlung einer Information bezüglich einer Position und/oder einer Ausrichtung des Stückguts auf dem Förderelement und/oder relativ zu einer Referenzposition bzw. einer Referenzrichtung. Zusätzlich kann die Funktionseinheit zur Übermittlung dieser Information an eine zentrale Steuereinheit mittels der mobilen Signaleinheit dienen. Die erfindungsgemäße Ausbildung der Signaleinheit eignet sich jedoch insbesondere für eine Förderanlageneinheit, bei welcher die Funktionseinheit der Förderelemente eine Antriebseinheit ist, die zu einem Ab- und/oder Zuführen eines Stückguts von bzw. zu dem zugeordneten Förderelement vorgesehen ist. Hierbei kann eine Ungenauigkeit bei der Positionierung eines Stückguts auf dem Förderelement bzw. bei einem Ausschleusen eines transportierten Stückguts auf eine Ausschleusbahn vorteilhaft vermindert werden.

Gemäss der Erfindung wird vorgeschlagen, dass die Förderanlageneinheit eine Hauptförderrichtung, in welcher sich die Förderelemente bewegen, und eine stationäre Kommunikationseinheit aufweist, die zumindest zwei voneinander räumlich getrennte Sendeeinheiten umfasst, die jeweils einen Übertragungsbereich aufweisen, wobei sich die einzelnen Übertragungsbereiche paarweise in einer Überlappungszone überlappen und wobei der Abstand zwischen den mobilen Empfangseinheiten größer ist als die Erstreckung der Überlappungszone entlang der von einer der Empfangseinheiten in der Hauptförderrichtung zurückgelegten Strecke. Hierdurch kann eine Unterbrechung der Kommunikation zwischen der stationären Kommunikationseinheit und der mobilen Signaleinheit vorteilhaft vermieden werden. Hierbei kann eine Datenübertragung zwischen einer ersten stationären Sendeeinheit und einer sich im Übertragungsbereich der ersten Sendeeinheit befindenden mobilen Empfangseinheit fortgesetzt werden, während eine weitere Empfangseinheit der mobilen Signaleinheit in der Überlappungszone angeordnet ist. Während des Aufenthalts dieser Empfangseinheit in der Überlappungszone erfolgt eine Zuordnung dieser Empfangseinheit zu einer zweiten stationären Sendeeinheit, die einen weiteren Übertragungsbereich aufweist, der mit dem Übertragungsbereich der ersten Sendeeinheit die Überlappungszone bildet.

Ein "Übertragungsbereich" in Bezug auf das Steuersignal kann insbesondere durch das Verhältnis von der Signalstärke des Steuersignals an einem bestimmten Ort zur Signalstärke des von der Sendeeinheit erzeugten Steuersignals definiert werden, wobei zur Festlegung der Grenze des Übertragungsbereichs eine Untergrenze dieses Verhältnisses definiert wird.

Eine besonders konstruktiv einfache und kostengünstige Kommunikation zwischen der mobilen Signaleinheit und der stationären Kommunikationseinheit kann erreicht werden, wenn diese mittels Funksignalen erfolgt, und zwar insbesondere wenn die stationäre Kommunikationseinheit und die mobile Signaleinheit Bestandteile eines WLAN-Netzes sind.

Die erfindungsgemäße Ausführung der Signaleinheit eignet sich ferner insbesondere für eine Förderanlageneinheit, bei welcher die Signaleinheit mehreren Förderelementen zugeordnet ist, die in Reihe hintereinander in der Art eines Zuges von Förderelementen angeordnet sind. Unter einem "Zug" von Elementen soll insbesondere eine Aneinanderreihung von Elementen verstanden werden, bei welcher ein Zwischenabstand zwischen benachbarten Elementen bei einer gemeinsamen Bewegung der Elemente konstant bleibt. Hierdurch kann eine Verbindung zwischen der Steuereinheit der Signaleinheit und den ihr zugeordneten Funktionseinheiten besonders einfach erfolgen.

In einer vorteilhaften Weiterbildung wird vorgeschlagen, dass die mobile Signaleinheit und die stationäre Kommunikationseinheit zu einer Kommunikation mittels einer Vielzahl von Sendekanälen vorgesehen sind. Hierbei kann durch die vorgeschlagene Ausführung der Signaleinheit eine besonders beeinträchtigende Verzögerung in der Übertragung des Steuersignals vermieden werden, die sich aus einer Addierung der Verzögerungen pro Sendekanal ergeben könnte. Erfolgt die drahtlose Verbindung über Funksignale, ist ein Sendekanal vorzugsweise als Frequenzkanal ausgebildet.

Eine hohe Genauigkeit in Bezug auf die Förderung bzw. Sortierung einzelner Stückgüter kann erreicht werden, wenn die Förderelemente jeweils zur Förderung eines einzelnen Stückguts vorgesehen sind.

Ein Ausführungsbeispiel der Erfindung wird nachfolgend anhand der Zeichnung beschrieben. Es zeigt:
Figur 1 eine schematische Ansicht einer erfindungsgemäßen Förderanlageneinheit mit einem Zug von Quergurtförderern zum Ausschleusen von Paketen auf Sortierstrecken und mit einer mobilen Signaleinheit zur Kommunikation mit einer stationären Kommunikationseinheit und
Figur 2 eine Seitenansicht eines Förderelements der Förderanlageneinheit.

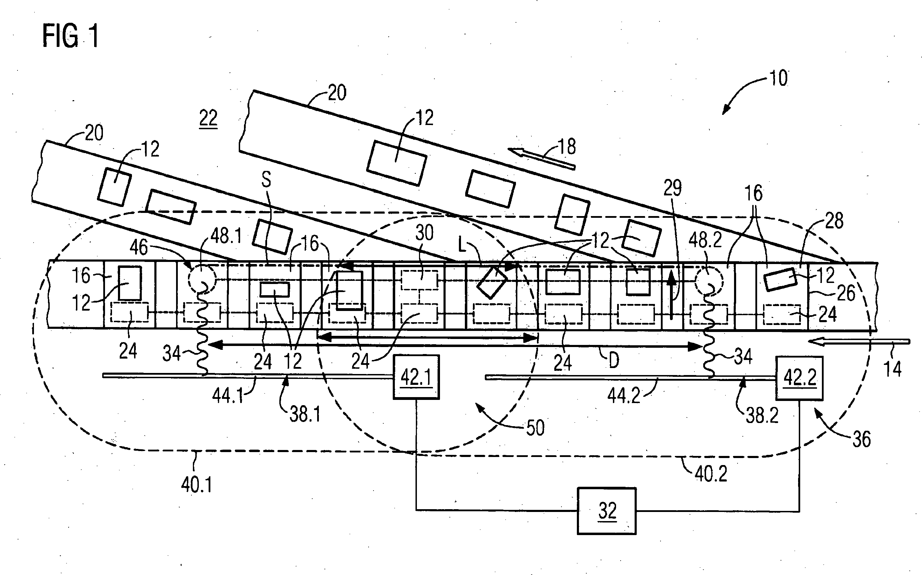

Figur 1 zeigt eine Förderanlageneinheit 10 in einer schematischen Ansicht von oben. Diese entspricht einem Abschnitt einer Förderanlage, die einen Bestandteil einer Sortiereinrichtung zum Sortieren von Stückgütern 12 darstellt. Im betrachteten Ausführungsbeispiel sind die mittels durchgezogener Linien dargestellten Stückgüter 12 als Packstücke, insbesondere Pakete ausgebildet. Weitere Ausführungen der Sortieranlage zum Sortieren von Paletten, Containern oder Gepäckstücken sind ebenfalls denkbar. Die Förderanlageeinheit 10 entspricht einem Teilbereich der Sortieranlage, in welchem die Stückgüter 12 entlang einer Hauptförderrichtung 14 mittels Förderelementen 16 gefördert werden und gemäß einem ihnen zugeordneten Ziel aus dem Materialfluss zu einer weiteren Förderung in einer Ausschleusrichtung 18 auf entsprechende Ausschleusbahnen 20 abgeführt werden, wobei die Ausschleusrichtung 18 relativ zur Hauptförderrichtung 14 schräg ausgerichtet ist.

Die Förderelemente 16 sind in der Art eines Zuges hintereinander in Reihe angeordnet und werden zu einer Bewegung in der Hauptförderrichtung 14 von einer nicht näher gezeigten Antriebseinheit angetrieben, wobei die Bewegung relativ zum Boden 22 erfolgt, auf welchem die Förderanlageeinheit 10 aufgestellt ist. In der Figur ist der Übersichtlichkeit halber lediglich ein Teil des Zuges von Förderelementen 16 dargestellt. In einer typischen Ausführung der Förderanlage weist der Zug ca. 60 Förderelemente auf. Ein Förderelement 16 hat eine typische Erstreckung in der Hauptförderrichtung 14 von ca. 80 cm, wobei der Zug eine gesamte Länge von ca. 50 m aufweist. Der Abstand zwischen zwei benachbarten Förderelementen 16 bleibt während einer Bewegung des Zuges konstant.

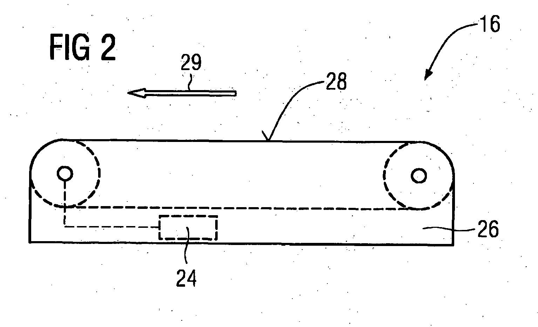

Bei einem Betrieb der Förderanlageneinheit 10 werden die Stückgüter 12 jeweils von einem unterschiedlichen Förderelement 16 gefördert, wobei ein Förderelement 16 jeweils zum Transportieren eines einzelnen Stückguts 12 vorgesehen ist. Die Förderelemente 16 sind ferner jeweils mit einer Funktionseinheit 24 ausgestattet, die zur Erfüllung einer Funktion in Verbindung mit dem vom entsprechenden Förderelement 16 transportierten Stückgut 12 vorgesehen ist. Im betrachteten Beispiel sind die die Förderelemente 16 ausstattenden, mittels gestrichelter Linien dargestellten Funktionseinheiten 24 jeweils als Antriebseinheiten ausgebildet, die dazu dienen, das auf dem Förderelement 16 transportierte Stückgut 12 vom Förderelement 16 abzuführen, um es auf eine einem bestimmten Ziel zugeordnete Ausschleusbahn 20 zu bewegen. Die Förderelemente 16 weisen hierzu jeweils einen relativ zum Boden 22 in Hauptförderrichtung 14 beweglichen Grundkörper 26 sowie ein relativ zum Grundkörper 26 bewegliches, von der entsprechenden Funktionseinheit 24 antreibbares Fördermittel 28 auf, mittels dessen eine Bewegung des transportierten Stückguts 12 für dessen Abführen vom Förderelement 16 auf eine bestimmte Ausschleusbahn 20 erzeugt werden kann. Das Fördermittel 28 erzeugt eine Bewegung des Stückguts 12 in einer Abführrichtung 29, die relativ zur Hauptförderrichtung quer ausgerichtet ist. Im betrachteten Beispiel ist das Fördermittel 28 eines Förderelements 16 als ein von der Funktionseinheit 24 antreibbares Band ausgebildet. Insbesondere ist es als Quergurt ausgeführt, welcher eine Bewegung des transportierten Stückguts 12 quer zur Hauptförderrichtung 14 erzeugt. Eine Ausführung eines Förderelements 16 ist in Figur 2 gezeigt. Weitere Ausführungen eines Fördermittels 28 eines Förderelements 16, wie z.B. als ein kippbares Element, welches mittels der Funktionseinheit 24 geneigt werden kann, oder als ein schuhartiges Element, sind denkbar.

Die Funktionseinheiten 24, d.h. im betrachteten Beispiel die Antriebseinheiten zum Antreiben des entsprechenden Fördermittels 28, werden mittels einer zentralen Steuereinheit 30 gesteuert, die in Wirkverbindung mit den Funktionseinheiten 24 steht. Die Steuereinheit 30 ist eine mobile Einheit, die sich mit dem Zug von Förderelementen 16 relativ zum Boden 22 bewegt und hierzu an einem der Förderelemente 16 befestigt ist. Mittels der Steuereinheit 30 können sämtliche Funktionseinheiten 24 des Zuges von Förderelementen 16 gesteuert werden. Eine Ausführungsvariante, in welcher der Zug von Förderelementen 16 mehrere Steuereinheiten aufweist, ist denkbar. Ein Steuervorgang, und zwar insbesondere eine Aktivierung der Funktionseinheit 24 eines bestimmten Förderelements 16 wird eingeleitet, wenn sich das vom Förderelement 16 transportierte Stückgut 12 in geeigneter Position befindet, um vom Förderelement 16 auf die seinem Ziel zugeordnete Ausschleusbahn 20 abgeführt zu werden. Ist ein Steuervorgang bzw. eine Aktivierung der entsprechenden Funktionseinheit 24 durch die mobile Steuereinheit 30 einzuleiten, wird von einer zentralen, stationären Steuereinheit 32 ein Steuersignal 34 erzeugt, das der mobilen Steuereinheit 30 zur Erledigung des Steuervorgangs übermittelt wird.

Die Kommunikation zwischen der zentralen stationären Steuereinheit 32 und der mobilen Steuereinheit 30 erfolgt mittels einer stationären Kommunikationseinheit 36, die zur drahtlosen Übermittlung von Signalen vorgesehen ist. Die stationäre Kommunikationseinheit 36 weist einen Satz von stationären, voneinander räumlich getrennten Sendeeinheiten 38.1, 38.2 auf, die jeweils Signale in einem Übertragungsbereich 40.1 bzw. 40.2 übertragen. Hierzu umfassen die Sendeeinheiten 38 jeweils eine Signalerzeugungseinheit 42, welche anhand eines Signals der zentralen Steuereinheit 32 das Steuersignal 34 aufbereitet, und eine Antenne 44 z.B. in der Form eines Koaxkabels, die zur Erzeugung eines Funksignals dient. Vorzugsweise ist das Steuersignal eine elektromagnetische Welle, die eine Frequenz im Gigahertz-Bereich aufweist. Die Kommunikation zwischen der zentralen stationären Steuereinheit 32 und der mobilen Steuereinheit 30 erfolgt ferner mittels einer mobilen Signaleinheit 46, die zur Herstellung einer drahtlosen Kommunikation mit der stationären Kommunikationseinheit 36 vorgesehen ist. Die Signaleinheit 46 bewegt sich mit dem Zug von Förderelementen 16 und bildet mit der stationären Kommunikationseinheit 36 ein so genanntes WLAN-Netz (oder Wireless Local Area Network).

Zum Empfangen des Steuersignals 34 weist die Signaleinheit 46 zwei mobile Empfangseinheiten 48.1, 48.2 auf, die mit einem Abstand zueinander getrennt voneinander angeordnet sind. Zur Übertragung des empfangenen Steuersignals 34 an die mobile Steuereinheit 30 stehen die Empfangseinheiten 48.1, 48.2 mit der Steuereinheit 30 in Wirkverbindung. Dadurch, dass die Steuereinheit 30 mit den Empfangseinheiten 48 einerseits und mit den Funktionseinheiten 24 andererseits in Wirkverbindung steht, kann eine Zuordnung des Steuersignals 34 an eine betreffenden Funktionseinheit 24 mittels der Steuereinheit 30 erfolgen. Zusätzlich weist die Signaleinheit 46 zwei Sendeinheiten auf, die zum Senden eines Signals der mobilen Steuereinheit 30 an die stationäre Kommunikationseinheit 36 dienen und im betrachteten Ausführungsbeispiel mit jeweils einer der Empfangseinheiten 48 einstückig ausgebildet sind. Voneinander separat ausgeführte Sendeeinheiten und Empfangseinheiten der Signaleinheit 46 sind jedoch denkbar.

In der Fachsprache wird die mobile, mit den Empfangseinheiten 48 verbundene Steuereinheit 30 gegenüber der als "Server" bezeichneten stationären Steuereinheit 32 als "Client" der mobilen Signaleinheit 46 bezeichnet, an welches die Steuersignale 34 der stationären Steuereinheit 32 adressiert sind. Hierzu muss eine eindeutige Zuordnung der mobilen Signaleinheit 46 und zwar insbesondere einer Hardware-Adresse (oder MAC-Adresse) des Clients zu einer stationären Sendeeinheit 38 der Kommunikationseinheit 36 vorliegen. Die Übertragungsbereiche 40.1 und 40.2 überlappen sich, wodurch eine Überlappungszone 50 entsteht, in welche eine der mobilen Empfangseinheiten 48 im Laufe der Bewegung der mobilen Signaleinheit 46 des Zuges von Förderelementen 16 in der Hauptförderrichtung 14 gelangt. Während des Aufenthalts dieser Empfangseinheit 48 in der Überlappungszone 50 wird eine Kommunikation dieser Empfangseinheit 48 mit einer der stationären Sendeeinheiten 38 abgeschaltet, während eine Kommunikation mit der benachbarten stationären Sendeeinheit 38 herzustellen ist. Die Überlappungszone 50 wird in der Fachsprache als "Roamingbereich" bezeichnet. Während des Aufenthalts der Empfangseinheit 48.1 in der Überlappungszone 50 wird eine Zuordnung der mobilen Signaleinheit 46, die vor dem Eintreten der Empfangseinheit 48.1 in die Überlappungszone 50 zur stationären Sendeeinheit 38.2 zugeordnet ist, zur benachbarten stationären Sendeeinheit 38.1 hergestellt. Dies erfolgt mittels eines Abtastprozesses, während dessen keine Kommunikation zwischen der mobilen Empfangseinheit 48.1 und der stationären Sendeeinheit 38.1 oder 38.2 stattfindet. Der Abtastprozess weist eine Zeitdauer von typischerweise 12 ms für einen Sendekanal auf. Eine Kommunikation zwischen der mobilen Signaleinheit 46 und der stationären Kommunikationseinheit 36 erfolgt über eine Vielzahl von Sendekanälen. Im vorliegenden Beispiel erfolgt die Kommunikation mittels fünf Sendekanälen, so dass die neue Zuordnung der mobilen Signaleinheit 46 zur stationären Sendeeinheit 38.1 eine Dauer von ca. 60 ms hat.

Während dieses Zuordnungsprozesses kann eine Kommunikation zwischen der mobilen Signaleinheit 46 und der stationären Kommunikationseinheit 36 weiterhin erfolgen, da sich die Empfangseinheit 48.2 noch im Übertragungsbereich 40.2 der Sendeeinheit 38.2 befindet. Das Absenden eines Steuersignals 34 der zentralen Steuereinheit 32 an die mobile Steuereinheit 30 und ein entsprechender Steuervorgang der betreffenden Funktionseinheit 24 können demnach auch während des oben beschriebenen Zuordnungsprozesses zur benachbarten stationären Sendeeinheit 38.1 erfolgen. Hierzu ist der Abstand D zwischen den mobilen Empfangseinheiten 48.1, 48.2 derart gewählt, dass er größer als die Erstreckung L der Überlappungszone 50 in der Hauptförderrichtung 14 entlang einer von der Empfangseinheit 48.1 in der Hauptförderrichtung 14 zurückgelegten Strecke S ist. Insbesondere soll der Abstand D größer als 2 m sein, was einer typischen Erstreckung der Überlappungszone 50 in der Hauptförderrichtung 14 im Bereich der Förderelemente 16 entspricht.

Ist die neue Zuordnung der mobilen Signaleinheit 46 zur stationären Sendeeinheit 38.1 erfolgt, wird das während des Zuordnungsprozesses über die Empfangseinheit 48.2 empfangene Steuersignal 34 über die Empfangseinheit 48.1 wiederholt empfangen. Die Steuereinheit 30 ist dazu vorgesehen, ein solches Doppelempfangen zu erkennen und das später empfangene Steuersignal 34 zu verwerfen.

Die obige Beschreibung ist auf die Förderung und Ausschleusen der Stückgüter 12 aus einer Sortiereinrichtung gerichtet. Die Erfindung eignet sich ebenfalls für einen weiteren Bestandteil der Förderanlage, in welchem die Stückgüter 12 aus Einschleusstrecken zur Förderanlageneinheit 10 zugeführt werden.

## Patentansprüche

1. Förderanlageneinheit mit mobilen Förderelementen (16), die zum Fördern von Stückgütern (12) vorgesehen sind und jeweils eine Funktionseinheit (24) aufweisen, und einer mobilen Signaleinheit (46), die zum Herstellen einer drahtlosen Verbindung mit einer stationären Kommunikationseinheit (36) vorgesehen ist, wobei die Funktionseinheiten (24) jeweils mittels eines von der Signaleinheit (46) empfangenen Steuersignals (34) steuerbar sind, wobei
die Signaleinheit (46) zumindest zwei mobile, voneinander beabstandete Empfangseinheiten (48.1, 48.2) und eine mobile Steuereinheit (30) aufweist, welche für eine Zuordnung des Steuersignals (34) in Wirkverbindung mit den Empfangseinheiten (48.1, 48.2) und mit den Funktionseinheiten (24) steht; **gekennzeichnet durch** eine Hauptförderrichtung (14), in welcher sich die Förderelemente (16) bewegen, und eine stationäre Kommunikationseinheit (36), die zumindest zwei voneinander räumlich getrennte Sendeeinheiten (38.1, 38.2) umfasst, die jeweils einen Übertragungsbereich (40.1, 40.2) aufweisen, wobei sich die einzelnen Übertragungsbereiche (40.1, 40.2) paarweise in einer Überlappungszone (50) überlappen und wobei der Abstand (D) zwischen den mobilen Empfangseinheiten (48.1, 48.2) größer ist als die Erstreckung (L) der Überlappungszone (50) entlang einer von einer der Empfangseinheiten (48.1) in der Hauptförderrichtung (14) zurückgelegten Strecke (S).

2. Förderanlageneinheit nach Anspruch 1, **dadurch gekennzeichnet, dass** das Steuersignal (34) ein Aktivierungssignal für eine Funktionseinheit (24) ist.

3. Förderanlageneinheit nach einem der vorhergehenden Ansprüche, **dadurch gekennzeichnet, dass** die stationären Kommunikationseinheit (36) und die mobile Signaleinheit (46) Bestandteile eines WLAN-Netzes sind.

4. Förderanlageneinheit nach einem der vorhergehenden Ansprüche, **dadurch gekennzeichnet, dass** die Signaleinheit (46) mehreren Förderelementen (16) zugeordnet ist, die in Reihe hintereinander in der Art eines Zuges von Förderelementen (16) angeordnet sind.

5. Förderanlageeinheit nach einem der vorhergehenden Ansprüche, **dadurch gekennzeichnet, dass** die mobile Signaleinheit (46) und die stationäre Kommunikationseinheit (36) zu einer Kommunikation mittels einer Vielzahl von Sendekanälen vorgesehen sind.

6. Förderanlageeinheit nach einem der vorhergehenden Ansprüche, **dadurch gekennzeichnet, dass** die Funktionseinheit (24) der Förderelemente (16) eine Antriebseinheit ist, die zu einem Ab- und/oder Zuführen eines Stückguts (12) von bzw. zu dem zugeordneten Förderelement (16) vorgesehen ist.

7. Förderanlageneinheit nach einem der vorhergehenden Ansprüche, **dadurch gekennzeichnet, dass** die Förderelemente (16) jeweils zur Förderung eines einzelnen Stückguts (12) vorgesehen sind.

## Claims

1. Conveying installation unit with mobile conveying elements (16), which are provided to convey piece goods (12) and each have a functional unit (24), and a mobile signal unit (46), which is provided to establish a wireless link with a stationary communication unit (36), wherein the functional units (24) can each be controlled by means of a control signal (34) received by the signal unit (46), wherein
the signal unit (46) has at least two mobile receiving units (48.1, 48.2) arranged at a distance from one another and a mobile control unit (30), which is actively connected to the receiving units (48.1, 48.2) and to the functional units (24) so as to assign the control signal (34), **characterised by** a main conveying direction (14), in which the conveying elements (16) move and a stationary communication unit (36), which comprises at least two transmit units (38.1, 38.2) which are spatially separated from one another, each of which has a transmission range (40.1, 40.2), wherein the individual transmission ranges (40.1, 40.2) overlap in pairs in an overlap zone (50) and wherein the distance (D) between the mobile receiving units (48.1, 48.2) is greater than the extent (L) of the overlap zone (50) along a path (S) travelled by one of the receiving units (48.1) in the main conveying direction (14).

2. Conveying installation unit according to claim 1, **characterised in that** the control signal (34) is an activation signal for a functional unit (24).

3. Conveying installation unit according to one of the preceding claims, **characterised in that** the stationary communication unit (36) and the mobile signal unit (46) are components of a WLAN network.

4. Conveying installation unit according to one of the preceding claims, **characterised in that** the signal unit (46) is assigned to a number of conveying elements (16), which are arranged in series one behind the other in the manner of a train of conveying elements (16).

5. Conveying installation unit according to one of the preceding claims, **characterised in that** the mobile signal unit (46) and the stationary communication unit (36) are provided for communication by means of a plurality of transmit channels.

6. Conveying installation unit according to one of the preceding claims, **characterised in that** the functional unit (24) of the conveying elements (16) is a drive unit, which is provided to lead away and/or feed an item of piece goods (12) from or to the assigned conveying element (16).

7. Conveying installation unit according to one of the preceding claims, **characterised in that** the conveying elements (16) are each provided so as to convey an individual item of piece goods (12).

## Revendications

1. Unité d'installation de transport ayant des éléments (16) de transport mobiles, qui sont prévus pour le transport de marchandises (12) en colis et qui ont respectivement une unité (24) fonctionnelle et une unité (46) de signalisation mobile, qui est prévue pour ménager une liaison sans fil avec une unité (36) de communication fixe, les unités (24) fonctionnelles pouvant être commandées respectivement, au moyen d'un signal (34) de commande reçu par l'unité (46) de signalisation,
dans laquelle
l'unité (46) de signalisation a au moins deux unités (48.1, 48.2) de réception mobiles à distance l'une de l'autre et une unité (30) de commande mobile qui, pour une affectation du signal (34) de commande, est en liaison d'action avec les unités (48.1, 48.2) de réception et avec les unités (24) fonctionnelles,
**caractérisée par** un sens (14) principal de transport, dans lequel les éléments (16) de transport se déplacent, et par une unité (36) de communication fixe, qui comprend au moins deux unités (38.1, 38.2) d'émission, séparées l'une de l'autre dans l'espace et ayant respectivement une partie (40.1, 40.2) de transmission, les diverses parties (40.1, 40.2) de transmission se chevauchant paire par paire dans une zone (50) de chevauchement et la distance (D) entre les unités (48.1, 48.2) de réception mobiles étant plus grande que l'étendue (L) de la zone (50) de chevauchement, le long d'une section (S) parcourue par l'une des unités (48.1) de réception dans le sens (14) principal de transport.

2. Unité d'installation de transport suivant la revendication 1, **caractérisée en ce que** le signal (34) de commande est un signal d'activation d'une unité (24) fonctionnelle.

3. Unité d'installation de transport suivant l'une des revendications précédentes, **caractérisée en ce que** l'unité (36) de communication fixe et l'unité (46) de signalisation mobile sont des parties constitutives d'un réseau WLAN.

4. Unité d'installation de transport suivant l'une des revendications précédentes, **caractérisée en ce que** l'unité (46) de signalisation est associée à plusieurs éléments (16) de transport, qui sont disposés suivant une rangée les uns derrière les autres, à la manière d'un train d'éléments (16) de transport.

5. Unité d'installation de transport suivant l'une des revendications précédentes, **caractérisée en ce que** l'unité (46) de signalisation mobile et l'unité (36) de communication fixe sont prévues pour une communication, au moyen d'une pluralité de canaux d'émission.

6. Unité d'installation de transport suivant l'une des revendications précédentes, **caractérisée en ce que** l'unité (24) fonctionnelle des éléments (16) de transport est une unité d'entraînement, qui est prévue pour emporter une marchandise (12) en colis de l'élément (16) de transport associé et/ou pour l'y apporter.

7. Unité d'installation de transport suivant l'une des revendications précédentes, **caractérisée en ce que** les éléments (16) de transport sont prévus respectivement pour le transport d'une marchandise (12) en colis individuel.
